# EUROPEAN PATENT APPLICATION

(11) **EP 4 683 396 A1**
(43) Date of publication of application: **21.01.2026**
(21) Application number: 23933864.3
(22) Date of filing: 06.12.2023
(51) Int. Cl.: H04W 52/02

(54) **RESOURCE SCHEDULING METHOD AND APPARATUS**

(30) Priority: 20.04.2023 CN 202310459952
(71) Applicant: Honor Device Co., Ltd., Shenzhen, Guangdong 518040 (CN)
(72) Inventor: ZHANG, Maofei, Shenzhen, Guangdong 518040 (CN); WANG, Yingming, Shenzhen, Guangdong 518040 (CN); SHANG, Ming, Shenzhen, Guangdong 518040 (CN); LIU, Pengcheng, Shenzhen, Guangdong 518040 (CN)
(74) Representative: Goddar, Heinz J.
(86) International application number: PCT/CN2023/136691
(87) International publication number: WO 2024/216999

(57) **Abstract**

Embodiments of this application provide a resource scheduling method and apparatus, and relate to the field of terminal technologies. The method includes: A terminal device starts, where a power limit value of the terminal device is a first power consumption value; the terminal device turns off a screen at a first moment; the terminal device locks the screen at a second moment; the terminal device enters a sleep state at a third moment, where the power limit value of the terminal device between the first moment and the third moment is a second power consumption value, and the second power consumption value is greater than the first power consumption value; and the terminal device turns on the screen at a fourth moment. In this way, the terminal device can be in a high power mode before entering the sleep state to quickly enter the sleep state, and can also be in the high power mode before exiting the sleep state to quickly make a wake-up response.

## Description

This application claims priority to Chinese Patent Application No. 202310459952.9, filed with the China National Intellectual Property Administration on April 20, 2023 and entitled "RESOURCE SCHEDULING METHOD AND APPARATUS", which is incorporated herein by reference in its entirety.

### TECHNICAL FIELD

This application relates to the field of terminal technologies, and in particular, to a resource scheduling method and apparatus.

### BACKGROUND

Modem standby (modem standby, MS) is an idle function of a terminal device. In an MS state, the terminal device may enter a sleep state, to save energy and battery service life.

In an implementation, when the terminal device enters the sleep state, the terminal device may perform a series of program suspension operations and store a process context. When the terminal device exits the sleep state, the terminal device may load the process context to restore a state of the terminal device before entering the sleep state.

However, the foregoing process of entering the sleep state and/or exiting the sleep state takes a relatively long time, which affects user experience of using the sleep state.

### SUMMARY

Embodiments of this application provide a resource scheduling method and apparatus, to reduce a time consumed by a terminal device to enter/exit a sleep state.

According to a first aspect, an embodiment of this application provides a resource scheduling method. The method includes: A terminal device starts, where a power limit value of the terminal device is a first power consumption value; the terminal device turns off a screen at a first moment; the terminal device locks the screen at a second moment; the terminal device enters a sleep state at a third moment, where power limit values of the terminal device between the first moment and the second moment and between the second moment and the third moment are a second power consumption value, and the second power consumption value is greater than the first power consumption value; and the terminal device turns on the screen at a fourth moment. In this way, the terminal device can be in a high power mode before entering the sleep state to quickly enter the sleep state, and can also be in the high power mode before exiting the sleep state to quickly make a wake-up response.

The first moment may be a first time point or a fourth time point described in the embodiments of this application, the second moment may be a fifth time point described in the embodiments of this application, the third moment may be a second time point or a sixth time point described in the embodiments of this application, and the fourth moment may be a third time point or a seventh time point described in the embodiments of this application.

In a possible implementation, after the terminal device locks the screen, the method further includes: The terminal device does not set the power limit value of the terminal device to the first power consumption value based on the lock screen and a first flag bit being a first value, where the first flag bit being the first value is used to indicate that the terminal device is in a screen-off state. In this way, the terminal device can determine, by using the first flag bit, whether the terminal device is in the screen-off state, and does not enter a low power mode when detecting that the screen is locked and the terminal device is currently in the screen-off state, to avoid a case in which the terminal device is in the low power mode before sleeping.

The first flag bit may be screenoff, and the first value is true.

In a possible implementation, after the terminal device turns off the screen, the method further includes: The terminal device sets the power limit value of the terminal device to the second power consumption value based on the screen-off. In this way, the terminal device can be set to the high power mode when detecting that the screen is turned off, so that the terminal device can enter a sleep mode in the high power mode, to reduce a time consumed for entering the sleep mode.

In a possible implementation, the terminal device includes a system probe module and a scene identification module. That the terminal device does not set the power limit value of the terminal device to the first power consumption value based on the lock screen and a first flag bit being a first value includes: The system probe module does not report a lock screen event to the scene identification module based on the lock screen and the first flag bit being the first value, and does not set the power limit value of the terminal device to the first power consumption value. In this way, the system probe module can determine, by using the first flag bit being the first value and the lock screen, not to report the lock screen event to the scene identification module, to avoid that the terminal device is set to the low power mode based on the lock screen event.

In a possible implementation, the method further includes: The system probe module does not report a screen-on event to the scene identification module based on the screen-on and a second flag bit being a second value, where the second flag bit being the second value is used to indicate that the terminal device is in a screen-locked state. In this way, the terminal device can determine, by using the second flag bit, whether the terminal device is in the screen-locked state, and does not enter the low power mode when detecting that the screen is locked and is currently turned on, to avoid that the terminal device is in the low power mode before being woken up.

The second flag bit is islocked, and the second value is true.

In a possible implementation, the method further includes: The terminal device runs a first application, where the power limit value of the terminal device is the second power consumption value; the terminal device locks the screen at a fifth moment; the terminal device turns off the screen at a sixth moment, where the power limit value of the terminal device between the fifth moment and the sixth moment is the first power consumption value; the terminal device enters the sleep state at a seventh moment, where the power limit value of the terminal device between the sixth moment and the seventh moment is the second power consumption value; and the terminal device turns on the screen at an eighth moment. In this way, the terminal device can be in a high power mode before entering the sleep state to quickly enter the sleep state, and can also be in the high power mode before exiting the sleep state to quickly make a wake-up response.

The fifth moment may be an eighth time point described in the embodiments of this application, the sixth moment may be a ninth time point described in the embodiments of this application, the seventh moment may be a tenth time point described in the embodiments of this application, and the eighth moment may be an eleventh time point described in the embodiments of this application.

In a possible implementation, after the terminal device locks the screen, the method further includes: The terminal device sets the power limit value of the terminal device to the first power consumption value based on the lock screen and the first flag bit being a third value, where the first flag bit being the third value is used to indicate that the terminal device is not in the screen-off state. The terminal device can determine, by using the first flag bit, whether the terminal device is in the screen-off state, and enter the low power mode when detecting that the screen is locked and the terminal device currently is not in the screen-off state, to keep the terminal device running at low power consumption.

According to a second aspect, an embodiment of this application provides a resource scheduling apparatus. The resource scheduling apparatus includes a unit configured to perform the method in the first aspect. The apparatus may correspondingly perform the method described in the first aspect. For related descriptions of the unit in the apparatus, refer to the descriptions in the first aspect. For brevity, details are not described herein again.

The method described in the first aspect may be implemented by hardware, or may be implemented by executing corresponding software by hardware. The hardware or the software includes one or more modules or units corresponding to the foregoing functions, for example, a processing module or unit or a display module or unit.

According to a third aspect, this application provides a terminal device. The terminal device includes a memory and one or more processors. The memory is configured to store computer program code, and the computer program code includes computer instructions. When the computer instructions are executed by the processor, the terminal device is enabled to perform the method according to any possible implementation of the first aspect.

According to a fourth aspect, this application provides a computer-readable storage medium, and the computer-readable storage medium includes computer instructions. When the computer instructions are run on a terminal device (for example, a computer), the terminal device is enabled to perform the method according to any one of the first aspect and the possible design manners of the first aspect.

According to a fifth aspect, this application provides a computer program product. When the computer program product runs on a computer, the computer is enabled to perform the method according to any one of the first aspect and the possible design manners of the first aspect.

According to a sixth aspect, this application provides a chip system. The chip system includes one or more interface circuits and one or more processors. The interface circuit and the processor are interconnected by using a line. The chip system may be applied to a terminal device that includes a communication module and a memory. The interface circuit is configured to receive a signal from the memory of the terminal device, and send the received signal to the processor, where the signal includes computer instructions stored in the memory. When the processor executes the computer instructions, the terminal device can perform the method according to any one of the first aspect and the possible design manners of the first aspect.

It may be understood that, for beneficial effects that can be achieved by the resource scheduling apparatus according to the second aspect, the terminal device according to the third aspect, the computer-readable storage medium according to the fourth aspect, the computer program product according to the fifth aspect, and the chip system according to the sixth aspect provided above, reference may be made to the beneficial effects in any one of the first aspect and the possible design manners of the first aspect. Details are not described herein again.

### BRIEF DESCRIPTION OF DRAWINGS

FIG. 1 is a schematic diagram of a hardware structure of a terminal device according to an embodiment of this application;
FIG. 2 is a schematic diagram of a software architecture of a terminal device according to an embodiment of this application;
FIG. 3A and FIG. 3B are a schematic flowchart of working procedures of software and hardware when a terminal device schedules resources according to an embodiment of this application;
FIG. 4A and FIG. 4B are a schematic diagram of an interface for controlling sleep setting duration and screen-off setting duration according to an embodiment of this application;
FIG. 5A to FIG. 5C are a schematic diagram of a lock screen interface according to an embodiment of this application;
FIG. 6A to FIG. 6D are a schematic diagram of an interface for controlling lock screen setting duration according to an embodiment of this application;
FIG. 7 is a schematic flowchart of a resource scheduling method according to an embodiment of this application;
FIG. 8 is a schematic flowchart of another resource scheduling method according to an embodiment of this application;
FIG. 9 is a schematic flowchart of still another resource scheduling method according to an embodiment of this application;
FIG. 10 is a schematic flowchart of yet another resource scheduling method according to an embodiment of this application;
FIG. 11 is a schematic diagram of a structure of a resource scheduling apparatus according to an embodiment of this application; and
FIG. 12 is a schematic diagram of a hardware structure of another terminal device according to an embodiment of this application.

### DESCRIPTION OF EMBODIMENTS

To clearly describe the technical solutions in the embodiments of this application, in the embodiments of this application, words such as "first" and "second" are used to distinguish between same items or similar items with basically the same functions and effects. For example, a first value and a second value are merely used to distinguish between different values, but not used to limit a sequence thereof. A person skilled in the art may understand that the words such as "first" and "second" do not limit a quantity or an execution sequence, and the words such as "first" and "second" do not define a definite difference.

It should be noted that in this application, words such as "example" or "for example" are used to represent giving an example, an illustration, or a description. Any embodiment or design solution described as "example" or "for example" in this application should not be construed as being preferred or advantageous over other embodiments or design solutions. Exactly, the words such as "example" or "for example" are intended to present related concepts in a specific manner.

In this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

In an implementation, when a terminal device enters a sleep state, the terminal device may perform one or more of the following steps, and store a process context. For example, the performed steps may include: suspending an application, suspending a driver, controlling hardware to enter low power consumption, suspending an operating system and a central processing unit (central processing unit, CPU), indicating a random access memory (random access memory, RAM) to pause a read/write process, setting a CPU interrupt response, or the like. When the terminal device exits the sleep state (or can be understood as being woken up), the terminal device may load the process context, to restore a state of the terminal device before entering the sleep state.

It may be understood that processes such as storing the process context by the terminal device when entering the sleep state requires relatively high power consumption. When the terminal device enters the sleep state in a low power mode, CPU performance in the low power mode is relatively weak, and a case in which it takes a relatively long time to enter the sleep state or it is impossible to enter the sleep state may occur. In addition, when exiting the sleep state, the terminal device enters a mode before the sleep state, namely, the low power mode. Performance is weak, and it also takes a relatively long time to perform processes such as loading the process context. When the terminal device exits the sleep state in the low power mode, a case in which it takes a relatively long time to exit the sleep state possibly occurs.

In view of this, an embodiment of this application provides a resource scheduling method. The terminal device may be in the high power mode before entering the sleep state to quickly enter the sleep state, and may also be in the high power mode before exiting the sleep state to quickly make a wake-up response, so that the terminal device can quickly enter/exit an MS state.

The terminal device may be referred to as a terminal (terminal), user equipment (user equipment, UE), a mobile station (mobile station, MS), a mobile terminal (mobile terminal, MT), or the like. For example, the terminal device may be a mobile phone (mobile phone), a smart television, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in the embodiments of this application.

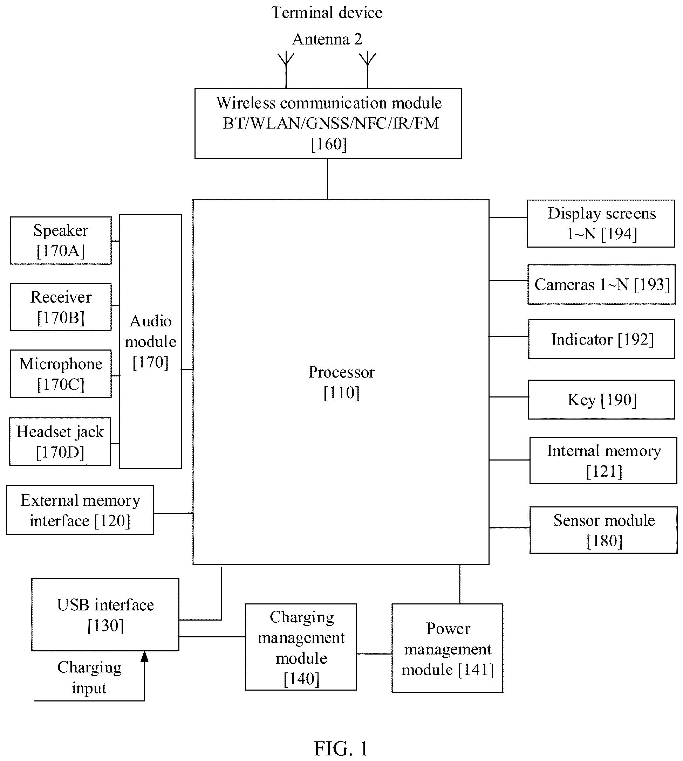

To better understand the embodiments of this application, the following describes a structure of the terminal device in the embodiments of this application. For example, FIG. 1 is a schematic diagram of a hardware structure of a terminal device according to an embodiment of this application.

As shown in FIG. 1, the terminal device may include a processor 110, an external memory interface 120, an internal memory 121, a universal serial bus (universal serial bus, USB) interface 130, a charging management module 140, a power management module 141, an antenna 2, a wireless communication module 160, an audio module 170, a speaker 170A, a receiver 170B, a microphone 170C, a headset jack 170D, a sensor module 180, a key 190, an indicator 192, a camera 193, a display screen 194, and the like.

The sensor module 180 may include one or more of the following: for example, a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, or the like.

It may be understood that the structure shown in the embodiments of this application does not constitute a specific limitation on the terminal device. In some other embodiments of this application, the terminal device may include more or fewer components than those shown in the figure, or combine some components, or split some components, or have different component arrangements. The components shown in the figure may be implemented by hardware, software, or a combination of software and hardware.

The processor 110 may include one or more processing units. Different processing units may be independent devices, or may be integrated into one or more processors. A memory may be further disposed in the processor 110 to store instructions and data.

The USB interface 130 is an interface that complies with USB standard specifications, and may be specifically a Mini USB interface, a Micro USB interface, a USB Type C interface, or the like. The USB interface 130 may be configured to be connected to a charger to charge the terminal device, may be configured to transmit data between the terminal device and a peripheral device, or may be configured to be connected to a headset to play audio through the headset. The interface may alternatively be configured to connect to another device, for example, an AR device.

The charging management module 140 is configured to receive a charging input from a charger. The charger may be a wireless charger or a wired charger. The power management module 141 is configured to be connected to the charging management module 140 and the processor 110.

A wireless communication function of the terminal device may be implemented by using the antenna 2, the wireless communication module 160, a baseband processor, and the like.

The antenna 2 is configured to transmit and receive electromagnetic wave signals. The antenna in the terminal device may be configured to cover one or more communication bands. Different antennas may be further multiplexed to improve antenna utilization.

The wireless communication module 160 may provide a solution for wireless communication that is applied to the terminal device and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), and the like.

The modem may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to an application processor. The application processor outputs a sound signal by using an audio device (that is not limited to a speaker, a receiver, and the like), or displays an image or a video by using the display screen 194. In some embodiments, the modem may be an independent device. In some other embodiments, the modem may be independent of the processor 110.

The terminal device implements a display function by using the GPU, the display screen 194, the application processor, and the like. The GPU is a microprocessor for image processing, and is connected to the display screen 194 and the application processor. The GPU is configured to perform mathematical and geometric computing for graphics rendering.

The display screen 194 is configured to display an image, a video, and the like. The display screen 194 includes a display panel. In some embodiments, the terminal device may include one or N display screens 194, where N is a positive integer greater than 1.

The terminal device may implement a shooting function by using an ISP, the camera 193, a video codec, the GPU, the display screen 194, the application processor, and the like.

The camera 193 is configured to capture a still image or a video. In some embodiments, the terminal device may include one or N cameras 193, where N is a positive integer greater than 1.

The external memory interface 120 may be configured to be connected to an external memory card such as a Micro SD card, to expand a storage capacity of the terminal device. The external memory card communicates with the processor 110 through the external memory interface 120, to implement a data storage function. For example, files such as music and a video are stored in the external memory card.

The internal memory 121 may be configured to store computer-executable program code, and the executable program code includes instructions. The internal memory 121 may include a program storage area and a data storage area.

The terminal device may implement an audio function, for example, music playback and recording, by using the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The speaker 170A, also referred to as a "loudspeaker", is configured to convert an audio electrical signal into a sound signal. The terminal device may be used to listen to music or answer a call in a hands-free mode through the speaker 170A. The receiver 170B, also referred to as an "earpiece", is configured to convert an audio electrical signal into a sound signal. When the terminal device receives a call or a voice message, the receiver 170B may be placed close to a human ear to receive the voice. The headset jack 170D is configured to be connected to a wired headset. The microphone 170C, also referred to as a "mic" or "mike", is configured to convert a sound signal into an electrical signal. In the embodiments of this application, the terminal device may have one microphone 170C.

The key 190 includes a power-on/off key, a volume key, and the like. The key 190 may be a mechanical key, or may be a touch key. The terminal device may receive a key input, and generate a key signal input related to user settings and function control of the terminal device. The indicator 192 may be an indicator light, may be configured to indicate a charging status or a power change, and may be further configured to indicate a message, a missed incoming call, a notification, and the like.

In addition, an operating system, for example, an iOS operating system, an Android (android) operating system, or a Windows operating system, is further run on the foregoing components of the device. An application may be installed and run on the operating system.

A software system of the terminal device may use a layered architecture, an event-driven architecture, a microkernel architecture, a microservice architecture, a cloud architecture, or the like. Details are not described herein.

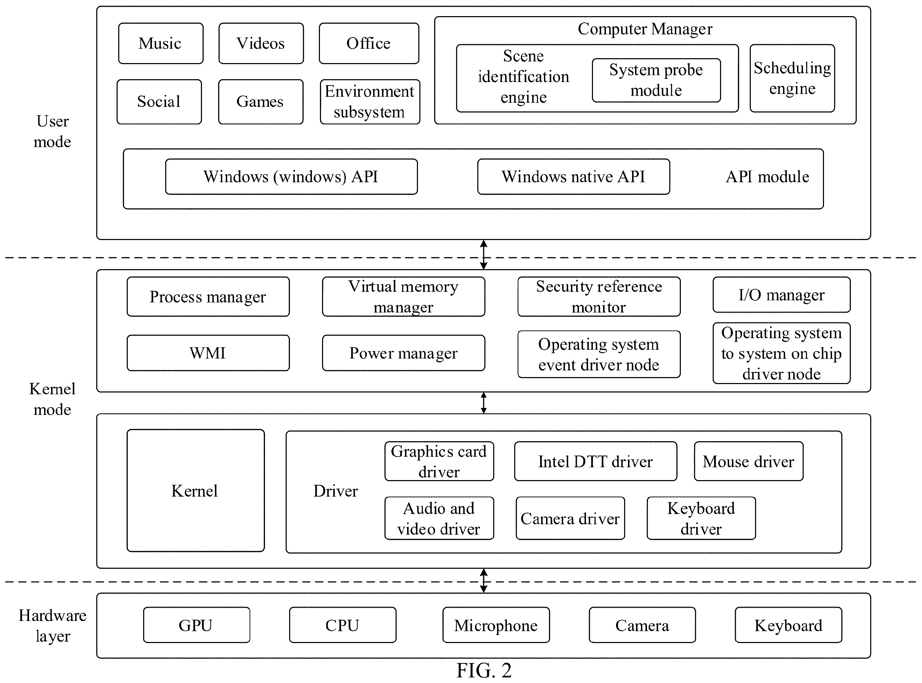

For example, FIG. 2 is a schematic diagram of a software architecture of a terminal device according to an embodiment of this application.

Before the software architecture applied in this embodiment of this application is described, parameters used in the resource scheduling method may be described.

Long-duration turbo boost power limit (power limit 1, PL1): or may be referred to as a power limit value, means power consumption of a CPU under a normal load, and is equivalent to thermal design power consumption. Operating power consumption of the CPU most of the time does not exceed PL1.

Short-duration turbo boost power limit (power limit 2, PL2): means a highest power mode that the CPU can reach in a short time, which has a duration limit. Generally, PL2 is greater than PL1.

CPU energy performance preference (energy performance preference, EPP): is used to reflect a scheduling preference of the CPU, with a value ranging from 0~255. A smaller CPU energy performance preference indicates higher performance of the CPU. A larger CPU energy performance preference indicates that the CPU prefers a low power mode.

In a layered architecture, software is divided into several layers, and each layer has a clear role and task. The layers communicate with each other through software interfaces. In some embodiments, a Windows system is divided into a user mode and a kernel mode, the user mode includes an application layer, and the kernel mode includes an OS layer.

As shown in FIG. 2, the application layer includes applications such as Music, Videos, Games, Office, Social, Environment Subsystem, and Computer Manager. The Computer Manager may include a scene identification engine and a scheduling engine, and the scene identification engine may include a system probe module and the like. A specific name of the Computer Manager application is not limited in this embodiment of this application.

Only some applications are shown in the figure. The application layer may further include other applications, for example, a shopping application and a browser. This is not limited in this application.

The environment subsystem may display some subsets of basic execution body system services to an application in a specific form, and provide an execution environment for the application.

The scene identification engine may identify a user scene in which the terminal device is located, and determine a basic scheduling policy that matches the user scene. The scheduling engine may obtain a load status of the terminal device, and determine, with reference to the load status of the terminal device and the basic scheduling policy, an actual scheduling policy that meets an actual running status of the terminal device. For specific content of the scene identification engine and the scheduling engine, refer to the following description, which is not described herein.

The user mode may further include an application programming interface (application programming interface, API) module, and the API module includes a Windows API, a Windows native API, and the like. Both the Windows API and the Windows native API can provide a system call entry and internal function support for an application, but differ in that the Windows native API is a native API of the Windows system. For example, the Windows API may include user.dll or kernel.dll, and the Windows native API may include ntdll.dll. Herein, user.dll is a Windows user interface API that can be used to perform operations such as creating a window and sending a message; kernel.dll is used to provide an interface for an application to access a kernel; and ntdll.dll is an important Windows NT kernel-level file. When Windows is started, ntdll.dll resides in a specific write-protected area in a memory, so that other programs cannot occupy this memory area.

The user mode may further include: a process manager, a virtual memory manager, a security reference monitor, an I/O manager, a Windows management instrumentation (Windows management instrumentation, WMI), a power manager, an operating system event driver (operating system event driver, OsEventDriver) node, an operating system to system on chip (operating system to System on Chip, OS2SOC) driver node, and the like.

The process manager is configured to create and abort a process and a thread.

The virtual memory manager implements a "virtual memory". The virtual memory manager also provides basic support for a cache manager.

The security reference monitor implements a security policy on a local computer, protects operating system resources, and protects and monitor a runtime object.

The I/O manager performs device-independent input/output, performs further processing, and calls an appropriate device driver.

The power manager may manage power status changes of all devices that support power status changes, and may also detect and report states such as a sleep state, a wake-up state, a screen-locked state, an unlocked state, a screen-off state, and a screen-on state of the terminal device.

The operating system event driver node may interact with a kernel-and-driver, for example, interact with a graphics card driver, and report the GPU video decoding event to a scene identification engine after determining that there is a GPU video decoding event. Alternatively, the operating system event driver node may interact with the power manager, and report a device status to the system probe module.

The operating system to system on chip driver node is available for the scheduling engine to send adjustment information to a hardware device, for example, to send PL1 and PL2 adjustment information to the CPU.

The kernel is an abstraction of a processor architecture, and isolates a difference between an execution body and the processor architecture, to ensure portability of the system. The kernel may perform thread arrangement and scheduling, trap handling, exception scheduling, interrupt processing and scheduling, and the like.

The device driver runs in a kernel mode, and is an interface between an I/O system and related hardware. The device driver may include a graphics card driver, an Intel DTT driver, a mouse driver, an audio and video driver, a camera driver, a keyboard driver, and the like. For example, the graphics card driver may drive the GPU to run, and the Intel DTT driver may drive the CPU to run.

A hardware layer may include hardware such as a GPU, a CPU, a microphone, a camera, and a keyboard, or the hardware layer may include a mouse (not shown in FIG. 2).

In a possible implementation, the terminal device may also include a hardware abstract layer (hardware abstract layer, HAL), which is not shown in FIG. 2. The HAL may be a kernel-mode module, can hide various hardware-related details, for example, an I/O interface, an interrupt controller, and a multi-processor communication mechanism, and provides a unified service interface for different hardware platforms that run Windows, to implement portability across a plurality of hardware platforms. It should be noted that to maintain the portability of Windows, internal components of Windows and user-written device drivers do not directly access the hardware, but by calling a routine in the HAL.

In a possible implementation, the terminal device may also include a firmware layer, which is not shown in FIG. 2. The firmware layer may include a basic input output system (basic input output system, BIOS). The BIOS is a set of programs solidified in a read-only memory (read only memory, ROM) chip on a computer mainboard, and stores a basic input output program, a self-test program during power-on, and a system self-starting program that are most essential on the computer, and may read and write specific information of system settings from a complementary metal oxide semiconductor (complementary metal oxide semiconductor, CMOS). A main function of the BIOS is to provide the computer with lowest-level and most direct hardware setting and control. The Intel DTT driver may send an instruction to the CPU through the BIOS.

It should be noted that only the Windows system is used as an example for description in this embodiment of this application. In another operating system (for example, an Android system or an IOS system), the solutions of this application can also be implemented provided that functions implemented by the functional modules are similar to those in this embodiment of this application.

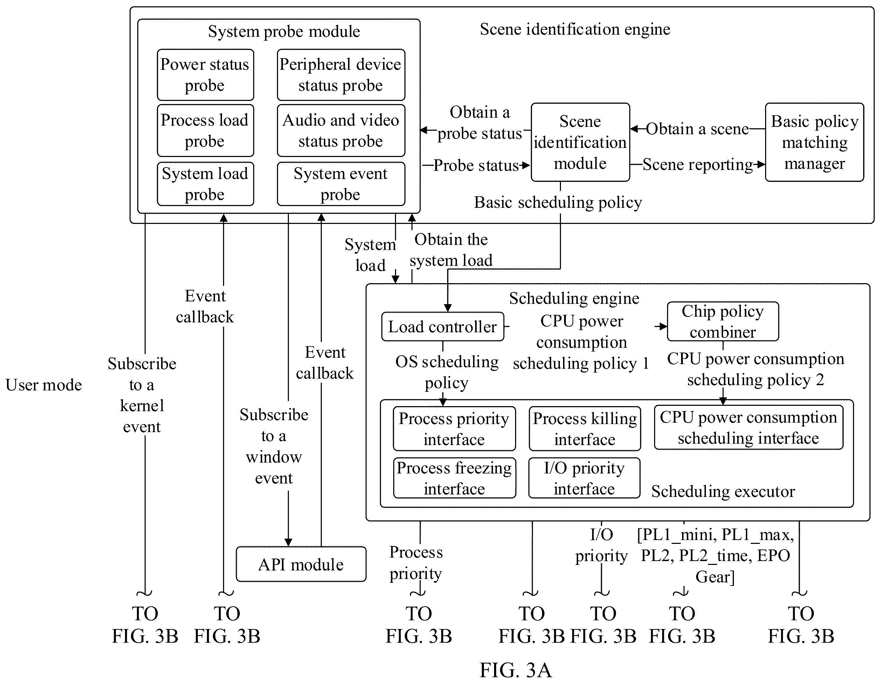

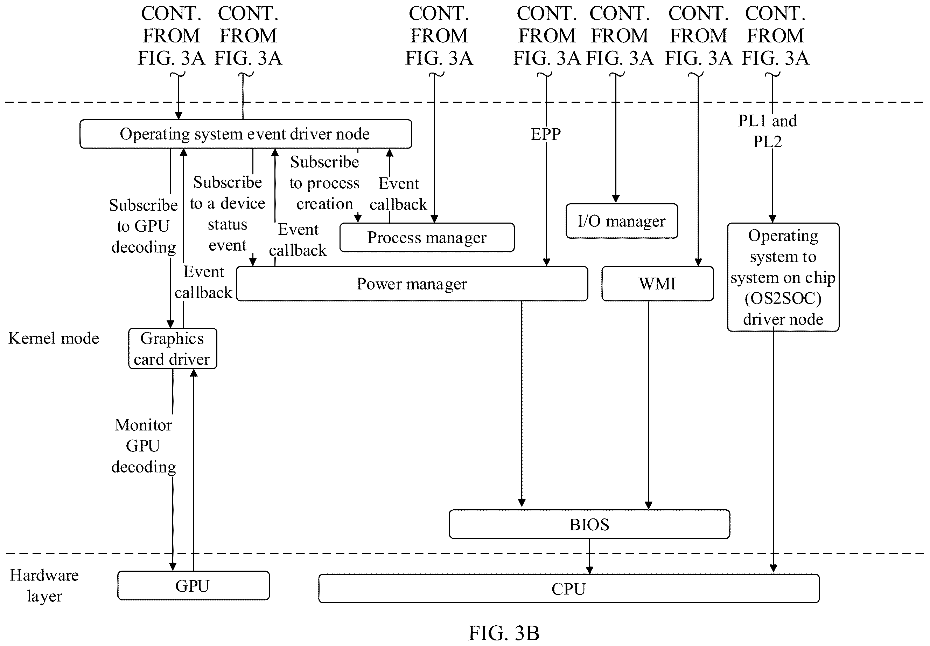

For example, FIG. 3A and FIG. 3B are a schematic flowchart of working procedures of software and hardware when a terminal device schedules resources according to an embodiment of this application.

As shown in FIG. 3A and FIG. 3B, the scene identification engine of the application layer includes a system probe module, a scene identification module, and a basic policy matching manager. The scene identification module may separately interact with the system probe module and the basic policy matching manager. The scene identification module may send a request for obtaining a probe status to the system probe module. The system probe module may obtain a running status of the terminal device. For example, the system probe module may include a power status probe, a peripheral device status probe, a process load probe, an audio and video status probe, a system load probe, and a system event probe.

The power status probe may subscribe to a power status event from the kernel mode, and determine a power status based on a callback function fed back by the kernel mode. The power status includes a (remaining) electricity quantity of a battery, a power source mode, and the like. The power source mode may include an alternating current (alternating current, AC) power source and a direct current (direct current, DC) power source. For example, the power status probe may send a request for subscribing to the power status event to the OsEventDriver node of an execution body layer. The OsEventDriver node forwards the request to the power manager of the execution body layer. The power manager may feed back the callback function to the power status probe by using the OsEventDriver node.

The peripheral device status probe may subscribe to a peripheral device event from the kernel mode, and determine the peripheral device event based on a callback function fed back by the kernel mode. Peripheral device events include a mouse wheel sliding event, a mouse click event, a keyboard input event, a microphone input event, a camera input event, and the like.

The process load probe may subscribe to a process load from the kernel mode, and determine the process load based on a callback function fed back by the kernel mode.

The system load probe may subscribe to a system load from the kernel mode, and determine the system load based on a callback function fed back by the kernel mode.

The audio and video status probe may subscribe to an audio and video event from the kernel mode, and determine, based on a callback function fed back by the kernel mode, an audio and video event currently existing on the terminal device. Audio and video events may include a GPU decoding event, and the like. For example, the audio and video status probe may send a request for subscribing to the GPU decoding event to the OsEventDriver node of the execution body layer. The OsEventDriver node forwards the request to the graphics card driver. The graphics card driver can monitor a status of the GPU. After detecting that the GPU is performing a decoding operation, the graphics card driver feeds back a callback function to the audio and video status probe by using the OsEventDriver node.

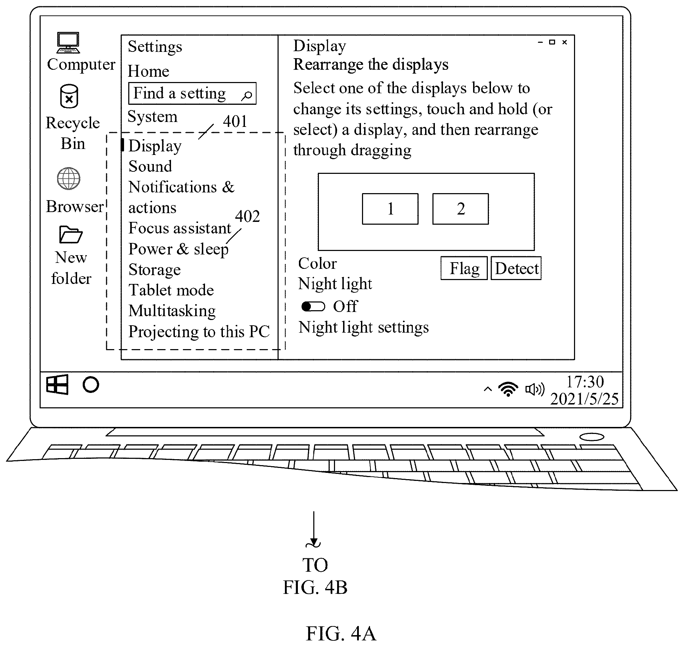

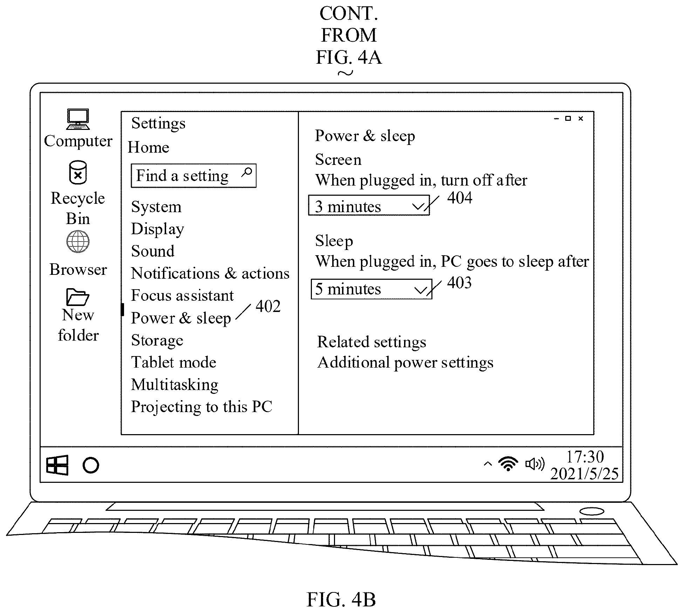

The system event probe may subscribe to a system event from the kernel mode, and determine the system event based on a callback function fed back by the kernel mode. System events may include one or more of the following: for example, a device status event, a window change event, a process creation event, and a thread creation event. Device status events may include a screen-off event, a screen-on event, a lock screen event, an unlock event, a sleep event, a wake-up event, and the like. For meanings of the device status events, refer to descriptions in embodiments corresponding to FIG. 4A and FIG. 4B-FIG. 6A to FIG. 6D.

For example, the system event probe may send a request for subscribing to the process creation event to the OsEventDriver node. The OsEventDriver node forwards the request to the process manager. The process manager may feed back a callback function to the system event probe by using the OsEventDriver node after creating a process. For another example, the system event probe alternatively sends a request for subscribing to a focus window change event to the API module. The API module may monitor whether a focus window of the terminal device changes, and feeds back a callback function to the system event probe when detecting that the focus window changes.

In this embodiment of this application, the system event probe may further send a request for subscribing to the device status event by using the OsEventDriver node. The OsEventDriver node forwards the request for subscribing to the device status event to the power manager. For example, the power manager may use the OsEventDriver node. When detecting that a system status changes, the power manager may feed back a callback function to the system event probe by using the OsEventDriver node, to notify the system status.

It may be learned that the system probe module obtains the probe status by subscribing to various events of the terminal device from the kernel mode and then determining the running status of the terminal device based on the callback function fed back by the kernel mode. After obtaining the probe status, the system probe module may feed back the probe status to the scene identification module. After receiving the probe status, the scene identification module may determine, based on the probe status, the user scene in which the terminal device is located.

For example, when the system probe module detects the lock screen event and feeds back to the scene identification module that the terminal device is currently in the screen-locked state, the scene identification module may identify, based on the screen-locked state, that the terminal device may currently be in an idle (idle) scene in the user scene.

The user scene may reflect a current usage requirement of a user. For example, the user scene may be classified into a scene in a low power mode and a scene in a high power mode based on a power consumption type. Scenes in the low power mode may include the idle scene, a browser scene, a video scene, an office scene, a social scene, and the like. Scenes in the high power mode may include a game scene, a compilation scene, a conference scene, a default scene, and the like.

For example, when identifying that the terminal device turns off a screen or locks the screen, the scene identification module determines that the terminal device may be in the idle scene, to reduce power consumption of the terminal device. For another example, when identifying that the focus window is a window of a video application, the scene identification module determines that the terminal device is in the video scene, which indicates that the user needs to use the video application to watch and browse videos. For another example, when identifying that the focus window is a WeChat^{™} chat window, the scene identification module determines that the terminal device is in the social scene.

Further, the scene identification module may further send the user scene to the basic policy matching manager. The basic policy matching manager may determine the basic scheduling policy based on the user scene. The basic policy matching manager may feed back the basic scheduling policy to the scene identification module. The scene identification module may send the basic scheduling policy and the user scene to the scheduling engine of the application layer.

As shown in FIG. 3A and FIG. 3B, the scheduling engine includes a load controller, a chip policy combiner, and a scheduling executor. The load controller may receive the basic scheduling policy and user scene sent by the scene identification module. The load controller may further obtain the system load from the system probe module, and adjust the basic scheduling policy based on the system load and the user scene, to obtain an actual scheduling policy. Actual scheduling policies include an OS scheduling policy and a first CPU power consumption scheduling policy (also referred to as a first sub-policy). The load controller may send the OS scheduling policy to the scheduling executor. The scheduling executor performs scheduling based on the OS scheduling policy. The OS scheduling policy is used for adjusting a process priority and an I/O priority of a focus process. For example, the scheduling executor may send an instruction for adjusting the process priority of the focus process to the process manager. The process manager adjusts the process priority of the focus process in response to the instruction. For another example, the scheduling executor may send an instruction for adjusting the I/O priority of the focus process to the I/O manager. The I/O manager adjusts the I/O priority of the focus process in response to the instruction.

The load controller may further send the first CPU power consumption scheduling policy to the chip policy combiner. The chip policy combiner may obtain a second CPU power consumption scheduling policy (also referred to as a second sub-policy) based on a CPU chip platform type and the first CPU power consumption scheduling policy.

CPU chip platform types are mainly classified into two types: a CPU from Advanced Micro Devices^{®} (advanced micro devices, AMD), which may be referred to as a first type; and a CPU from Intel^{®} (Intel^{®}), which may be referred to as a second type. The two types of CPUs are different in a manner of adjusting CPU power consumption, and need to be distinguished.

If the CPU chip platform type is the first type, the scheduling executor may send an EPP adjustment instruction to the power manager to adjust the CPU EPP. In addition, the scheduling executor may further send a PL1 and PL2 adjustment instruction to the OS2SOC driver node to adjust PL1 and PL2 of the CPU.

If the CPU chip platform type is the second type, the scheduling executor may send the second CPU power consumption scheduling policy to the Intel DTT driver by using a WMI plug-in. The second CPU power consumption scheduling policy may include a minimum value of PL1, a maximum value of PL1, PL2, duration of PL2, and an EPP. The Intel DTT drives the CPU to run based on the second CPU power consumption scheduling policy.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments again.

To facilitate understanding of the embodiments of this application, various types of device statuses involved in the embodiments of this application may be described.

### 1. Sleep and wake-up

Sleep can be understood as a state in which a terminal device keeps powered on and reduces power consumption. In a sleep state, the terminal device stores a process context in a process, and may only supply power to a memory. Another component in the terminal device is in a power-off state, So as to achieve a purpose of reducing power mode. In the sleep state, the terminal device needs to have electric power support. If a power source of the terminal device is disconnected or the power source is exhausted, the terminal device loses data in the memory, and the terminal device cannot be restored to a previous working state even if the power source is connected at this time.

Wake-up can be understood as the terminal device restoring from sleep to an active state. In a wake-up process, the terminal device may restore a power source of the component, and load the process context stored in the memory, so that the terminal device can be restored to a state before sleep after being woken up.

For example, when the terminal device detects an operation of clicking a sleep button by a user or the terminal device does not detect a user operation or the like within sleep setting duration, the terminal device may control a display screen to turn off, then, indicate a system to enter the sleep state, and store the process context. In a case that the terminal device is in the sleep state, when the terminal device detects a wake-up operation of the user, the terminal device may control the display screen to turn on, wake up the system, and load the process context. Wake-up operations may include operations such as clicking a mouse, moving the mouse, and clicking a keyboard. The sleep setting duration can be understood as duration from a time point at which the user performs no operation to a time point at which the terminal device enters the sleep state.

When a process is being executed, values in all registers of a CPU, a process status, content in a stack, and the like may be referred to as the process context.

For example, the user may control the sleep setting duration by using an operation. FIG. 4A and FIG. 4B are a schematic diagram of an interface for controlling sleep setting duration and screen-off setting duration according to an embodiment of this application. The interface described in this embodiment of this application is illustrated by using an example in which the terminal device is a computer. This example does not constitute a limitation on this embodiment of this application.

When the terminal device detects operations of clicking a right button and opening a display setting function by the user on a desktop, the terminal device may display an interface shown in FIG. 4A. The interface may display a setting window, and the setting window is used to set functions of the terminal device, for example, set functions such as display, sound, notification and operation, power source, and sleep. The setting window may display a plurality of buttons (for example, buttons in a range of a dashed-line box 401) used to modify system settings, for example, the setting window may display a power and sleep button 402.

In the interface shown in FIG. 4A, when the terminal device detects a click operation performed by the user on the power and sleep button 402, the terminal device may display an interface shown in FIG. 4B. In the interface shown in FIG. 4B, a setting window in the interface may display content used to control the sleep setting duration and the screen-off setting duration. For example, the setting window may display an option box 403 used to control the sleep setting duration.

The user may control the sleep setting duration by clicking the option box 403. For example, when words "5 minutes" are displayed in the option box 403, it may be understood that the terminal device may enter sleep when detecting no user operation within 5 minutes. In this case, the sleep setting duration may be 5 minutes.

### 2. Screen off and screen on

Screen off can be understood as powering off the display screen of the terminal device. When the screen is turned off, brightness of the display screen of the terminal device is less than preset brightness. Screen on can be understood as powering on the display screen of the terminal device. When the screen is turned on, brightness of the display screen of the terminal device is higher than the preset brightness. Power-on can be understood as a current greater than a preset current value, and power-off can be understood as a current less than the preset current value.

For example, when the terminal device detects an operation of clicking a sleep button by the user or the terminal device does not detect a user operation or the like within screen-off setting duration, the terminal device may control the display screen to turn off. In a case that the terminal device is in a screen-off state, when the terminal device detects a user operation for the mouse, the keyboard, or the like, the terminal device may control the display screen to turn on.

For example, the user may also control, through setting, duration for the terminal device to enter screen-off. In the interface shown in FIG. 4B, the setting window of the interface may further display an option box 404 used to control the screen-off setting duration. The screen-off setting duration may be duration from a time point at which the user performs no operation to a time point at which the terminal device enters a screen-off state.

The user may control the screen-off setting duration by clicking the option box 404. For example, when words "3 minutes" are displayed in the option box 404, it may be understood that the terminal device may turn off the screen when detecting no user operation within 3 minutes. In this case, the screen-off setting duration may be 3 minutes.

In an implementation, the terminal device may turn off the screen before entering the sleep state, or it is understood that a screen-off event may be generated before a sleep event, that is, the sleep setting duration may be greater than the screen-off setting duration.

### 3. Lock screen and unlock

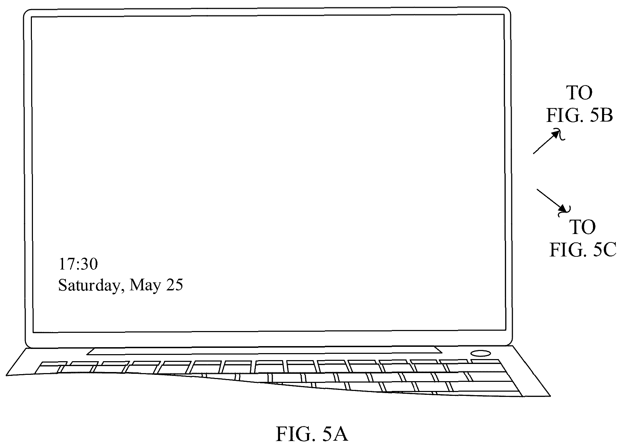

Lock screen can be understood as a state in which the terminal device displays a lock screen interface. In a screen-locked state, a program in the terminal device keeps in a running state. Display of the lock screen interface may ensure data security of the terminal device, and the lock screen interface may be an interface shown in FIG. 5A. For example, FIG. 5A to FIG. 5C are a schematic diagram of a lock screen interface according to an embodiment of this application. In an interface shown in FIG. 5A, the lock screen interface may display content such as a time, a date, and the like.

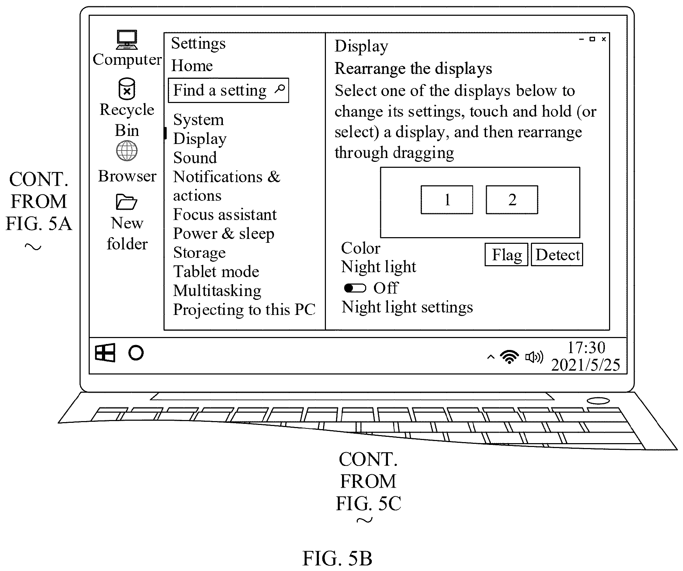

Unlock is to unlock the display screen of the terminal device. For example, in the interface shown in FIG. 5A, when the terminal device receives an operation such as pressing an Enter button in the keyboard or sliding the mouse upward by the user, the terminal device may unlock and restore to an interface displayed before the lock screen, for example, display an interface shown in FIG. 5B.

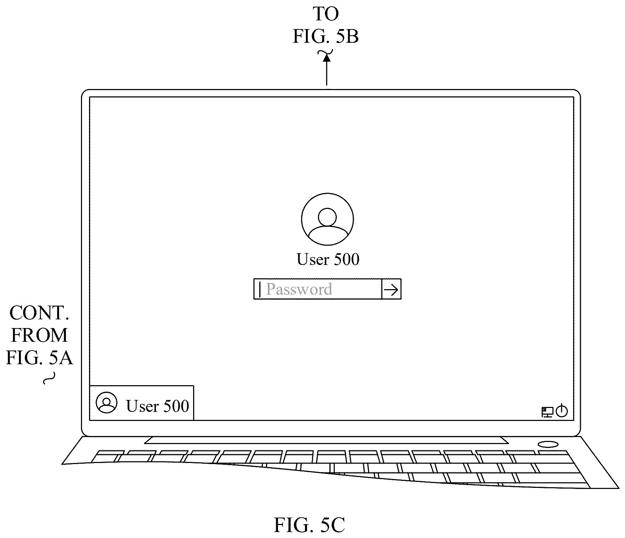

Alternatively, in the interface shown in FIG. 5A, when the terminal device receives an operation such as pressing an Enter button in the keyboard or sliding the mouse upward by the user, and the terminal device determines that a lock screen password is set, the terminal device may display an unlock interface shown in FIG. 5C. The interface shown in FIG. 5C may display one or more of the following: for example, an account name (for example, a user 500), a text box used to enter the lock screen password, a power button, or a button used to indicate a network status. Further, the terminal device may unlock the lock screen and display the interface shown in FIG. 5B when detecting operations such as entering a password in the text box and pressing Enter by the user.

For example, when the terminal device detects no user operation within lock screen setting duration, or detects that the user enters win+L in the keyboard or the like, the terminal device may control the display screen to lock the screen and display the lock screen interface. In a case that the terminal device is in the screen-locked state, when the terminal device detects a lock screen operation, the terminal device may unlock the display screen, so that the display screen restores to an interface displayed before the lock screen. The unlock operation may be an operation such as entering the Enter button in the keyboard, or sliding the mouse upward by the user, or may be an operation such as entering the password in the unlock interface by the user. The lock screen setting duration can be understood as duration from a time point at which the user performs no operation to a time point at which the terminal device enters the screen-locked state.

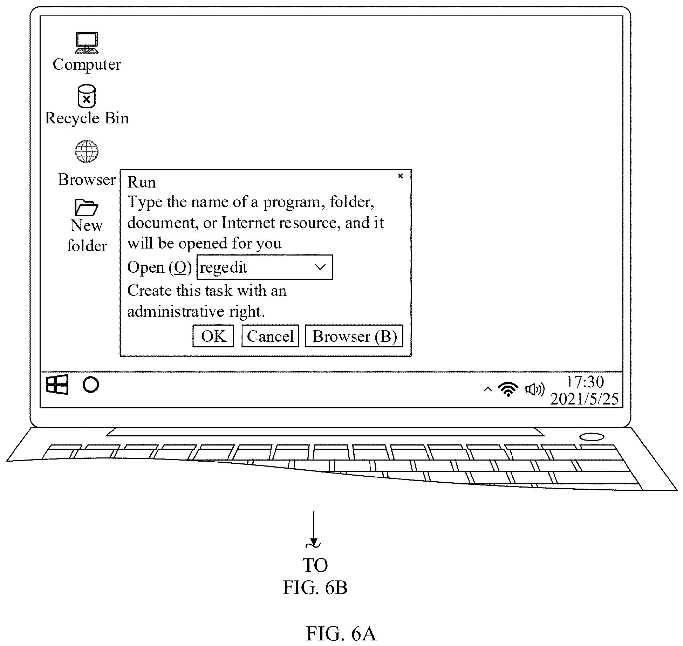

For example, the user may also control, by using an operation, the lock screen setting duration of the terminal device. FIG. 6A to FIG. 6D are a schematic diagram of an interface for controlling lock screen setting duration according to an embodiment of this application.

When the terminal device detects an operation of entering win+R in the keyboard by the user, the terminal device may display an interface shown in FIG. 6A. The interface may display a running window, and the running window is used to open a responsive program, a folder, a document, or a network resource based on an entered name. The running window displays a "regedit" command. The regedit command is used to open a registry in the terminal device. Alternatively, when the running window displays no user command, the user may enter "regedit" in a text box of the running window.

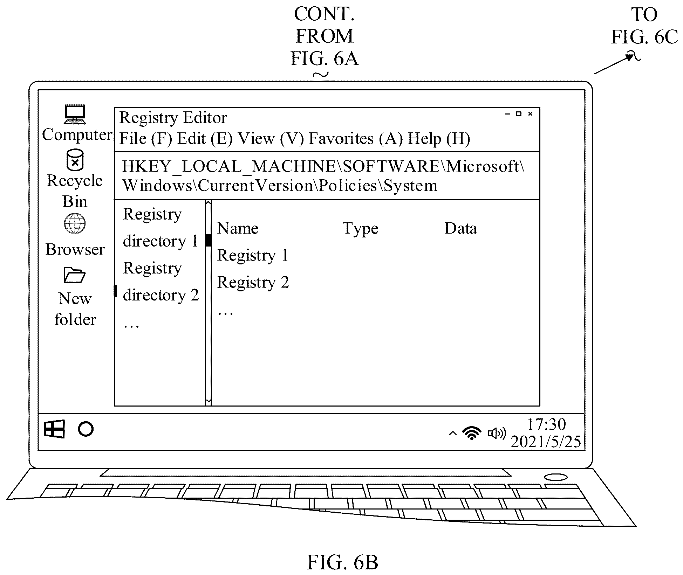

In the interface shown in FIG. 6A, when the running window displays a word "regedit" and the terminal device detects an operation of clicking an OK button by the user, the terminal device may display an interface shown in FIG. 6B. The interface shown in FIG. 6B may display a registry editor window, and the registry editor window is used to view or edit a registry. For example, the registry editor window may display various types of registries, for example, a registry directory 1, a registry directory 2, and a registry 1 and a registry 2 under the registry directory 1.

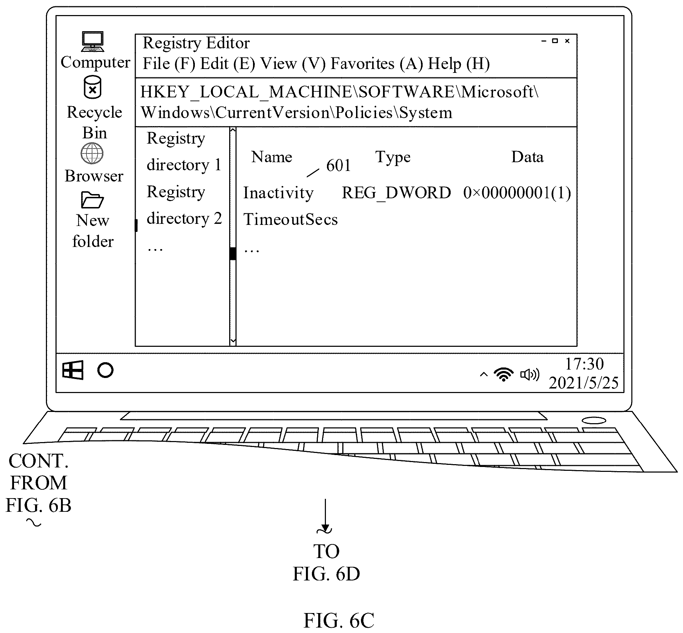

In the interface shown in FIG. 6B, when the terminal device detects an operation of entering "HKEY_LOCAL_MACHINE\SOFTWARE\Microsoft\Windows\CurrentVersion\Policies\Syste m" in a path text box by the user, the terminal device queries a path entered by the user, and displays an interface shown in FIG. 6C. In the interface shown in FIG. 6C, the registry editor window of the interface may display a registry 601. The registry 601 is used to control the lock screen setting duration, and the registry 601 may be displayed as words "InactivityTimeoutSecs".

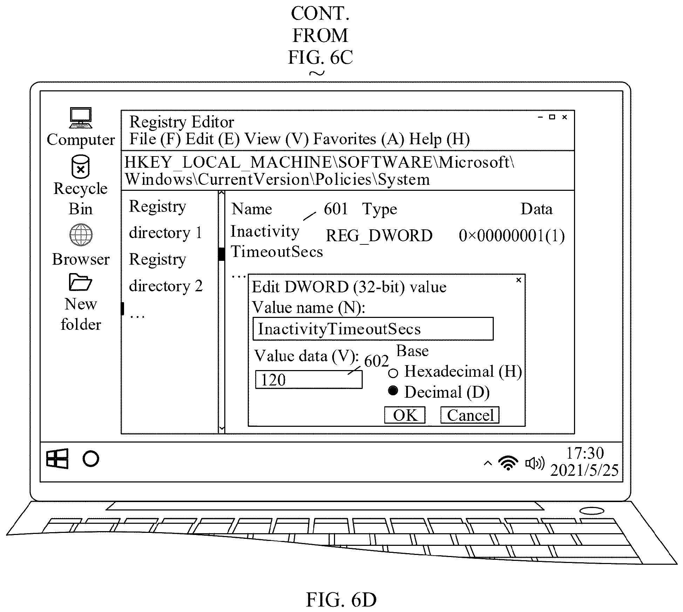

In the interface shown in FIG. 6C, when the terminal device detects an operation of double clicking the registry 601 by the user, the terminal device may display an interface shown in FIG. 6D. The interface shown in FIG. 6D may include a lock screen setting duration control window, and the lock screen setting duration control window is used to control the lock screen setting duration. The lock screen setting duration control window may include a text box 602, and the text box 602 is used to enter the lock screen setting duration. Further, when the terminal device detects operations of entering the lock screen setting duration such as "120" in the text box 602, and clicking an OK button by the user, the terminal device may record that the lock screen setting duration is 120 seconds, and the lock screen setting duration may take effect after the system is restarted.

In a possible implementation, when the interface shown in FIG. 6C does not have the registry 601, the user may newly create a registry through right-clicking, for example, create a registry whose name is InactivityTimeoutSecs and lock screen setting duration is 120 seconds, to modify the lock screen setting duration.

With reference to descriptions of different device statuses, in an implementation, the terminal device may enter the screen-off state before entering the sleep state, in other words, the lock screen setting duration is less than the sleep setting duration. However, the lock screen does not necessarily cause the terminal device to enter the sleep state, and screen off does not cause the terminal device to enter the sleep state.

The terminal device in the screen-off or screen-locked state may enter an idle scene. The idle scene may be a scene in which duration in which no user operation is detected reaches the screen-off setting duration or the lock screen setting duration, for example, duration in which using the mouse, the keyboard, or the like by the user is not detected reaches the screen-off setting duration or the lock screen setting duration. In the idle scene, a low power mode may be entered.

The terminal device in a screen on and/or unlocked state may enter scene identification. For example, the terminal device detects a located scene based on a window or an application currently opened by the device, a running process, or the like. For a scene identification manner, refer to descriptions in the embodiment corresponding to FIG. 3A and FIG. 3B. Details are not described herein again.

With reference to the descriptions of the different device statuses, to resolve a problem of a relatively long time consumed by the terminal device to enter/exit the sleep state in the low power mode, an embodiment of this application provides a resource scheduling method, to enable the terminal device to meet the following conditions:
Condition 1: The terminal device is in a high power mode when turning off a screen.

In an implementation, the terminal device may deliver, when turning off the screen, a command for setting to an idle scene, and in this case, the terminal device is in a low power mode. When the terminal device enters a sleep state in the low power mode, it may take a relatively long time to enter sleep.

In another implementation, when the terminal device is in the low power mode, the terminal device may switch from the low power mode to the high power mode when turning off the screen, or when the terminal device is in the high power mode, the terminal device may keep in the high power mode when turning off the screen, to ensure that the terminal device enters the sleep state in the high power mode, thereby reducing a time consumed for entering the sleep state. For a specific procedure, refer to an embodiment corresponding to any one of a scene 1-a scene 4.

Power consumption set in the high power mode is greater than preset power consumption, for example, maximum power consumption in the high power mode is greater than the preset power consumption. Power consumption set in the low power mode is less than the preset power consumption, for example, maximum power consumption in the low power mode is less than the preset power consumption.

Condition 2: The terminal device does not report a lock screen event when detecting that the screen is locked and is currently turned off.

In an implementation, the terminal device reports the lock screen event when detecting that the screen is locked and is currently turned off. The terminal device delivers, based on the lock screen event, a command for setting to the idle scene, and in this case, the terminal device is in the low power mode. When the terminal device enters the sleep state in the low power mode, it may take a relatively long time to enter sleep. Reporting can be understood as a module in the terminal device sending data to another module.

In another implementation, when the terminal device enters sleep in a sequence of turning off the screen and locking the screen, the terminal device may be in the high power mode when turning off the screen, and does not report the lock screen event when detecting that the screen is locked and the terminal device is currently in the screen-off state, so that the terminal device keeps in the high power mode. For a specific procedure, refer to the embodiment corresponding to a scene 2.

Condition 3: When detecting that the screen is turned on and is currently locked, the terminal device does not report a screen-on event carrying a screen-locked state.

In an implementation, when the terminaldevice detects that the screen is turned on and is currently locked, the terminal device reports the screen-on event carrying the screen-locked state. The terminal device delivers, based on the screen-locked state, a command for setting to the idle scene, and in this case, the terminal device is in the low power mode. When the terminal device enters the sleep state in the low power mode, it may take a relatively long time to enter sleep.

In another implementation, when the terminal device enters a screen-on state from the screen-locked state, the terminal device may determine, when detecting the screen-on state, that the terminal device is currently in the screen-locked state, and the terminal device may not report the screen-on event carrying the screen-locked state, so that the terminal device keeps in the high power mode. For a specific procedure, refer to the embodiment corresponding to the scene 2 or a scene 3.

With reference to the foregoing various device statuses, an embodiment of this application provides three device status changes in entering/exiting the sleep state (refer to the scene 1-the scene 3) and one device status change without entering the sleep state (refer to the scene 4).

In the embodiments corresponding to the scene 1 to the scene 4, an example in which the low power mode is a first mode and the high power mode is a second mode is used for description. A power limit value of the terminal device in the first mode is a first power consumption value, a power limit value of the terminal device in the second mode is a second power consumption value, and the first power consumption value is less than the second power consumption value. In addition, an example in which a CPU chip platform type is a first type is used for description. For example, a Computer Manager may send an EPP adjustment instruction to a power manager, to adjust a CPU EPP. The Computer Manager may further send a PL1 and PL2 adjustment instruction to an operating system to system on chip driver node, to adjust PL1 and PL2 of a CPU. This is not limited in this embodiment of this application. The first power consumption value or the second power consumption value is PL1.

### Scene 1: Screen off->sleep->screen on->wake-up

In this embodiment of this application, the terminal device may enter a screen-off state in the first mode, switch from the first mode to the second mode when turning off the screen, and then enter the sleep state. When detecting a wake-up operation, the terminal device controls a display screen to turn on, and performs scene identification after the terminal device is woken up.

It may be understood that a time interval between wake-up and screen on is very small, or wake-up and screen on may occur simultaneously. Therefore, a sequence relationship between wake-up and screen on is not specifically limited in this embodiment of this application. For example, the terminal device may be woken-up first and then turn on the screen, or turn on the screen first and then be woken-up, or simultaneously turn on the screen and be woken-up. In the scene 1 to the scene 3 in the embodiments of this application, an example in which wake-up first and then screen on is used for description.

In this case, the scene 1 may be: first mode->screen off->switch to the second mode->sleep->screen on->wake-up

For the scene 1, the terminal device may turn off the screen after duration in which a user performs no operation reaches screen-off setting duration, and sleep after duration in which the user performs no operation reaches sleep setting duration.

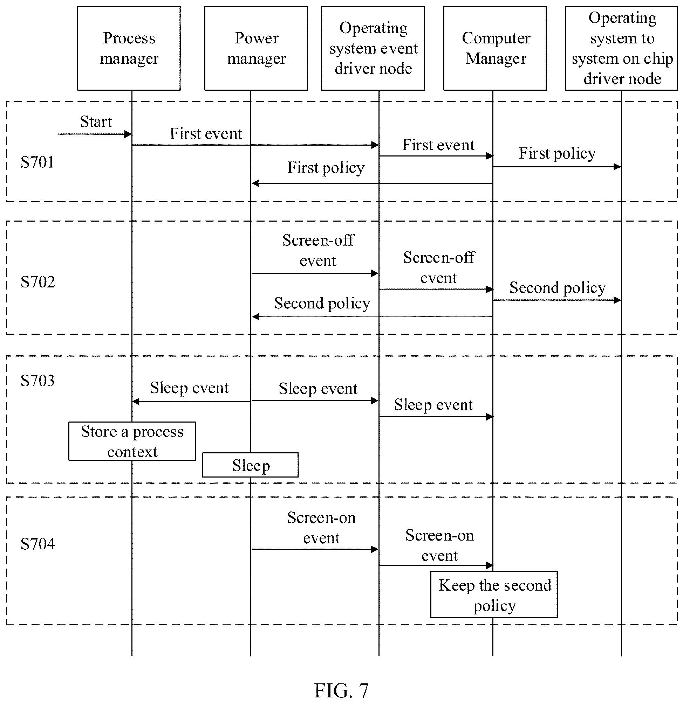

For example, FIG. 7 is a schematic flowchart of a resource scheduling method according to an embodiment of this application. In the embodiment corresponding to FIG. 7, the terminal device may be provided with modules such as a process manager, a power manager, an operating system event driver node, a Computer Manager, and an operating system to system on chip driver node. For modules included in the Computer Manager, refer to the embodiment corresponding to FIG. 3A and FIG. 3B. Details are not described herein again.

As shown in FIG. 7, the resource scheduling method may include the following steps.

S701. The terminal device starts, and does not run a first application.

When the first application is not running, the terminal device may be in a first mode, and a power limit value is a first power consumption value. The first application may be an application enabled in a second mode, for example, the first application may be a game application, a compilation application, a conference application, or the like.

In a possible implementation, the terminal device may deliver a first policy without running the first application, and the first policy includes the first power consumption value. With reference to the embodiment corresponding to FIG. 3A and FIG. 3B, a process of delivering the first policy may be as follows: The process manager may return, in a form of a first event, a use situation of an application to a system event probe in the Computer Manager by using a callback function of the operating system event driver node. The system event probe reports the first event to a scene identification module. When identifying, based on the first event reported by the system event probe, that the first application is not currently running, the scene identification module may determine that the terminal device is in a scene in the first mode, for example, the first scene, and in this case, the scene identification module in the terminal device may send the first scene to a basic policy matching manager. The basic policy matching manager may determine the first policy corresponding to the first scene, and feed back the first policy to the scene identification module. The scene identification module may send the first policy to a scheduling engine at an application layer. Further, the scheduling engine separately delivers the first policy to the operating system to system on chip driver node and the power manager.

The first policy may include one or more of the following: a scene identifier, a system load, or power consumption, or the like. A load status may include one or more of the following: a CPU load, a disk load, a GPU 3D usage, a GPU video (video) usage, or a load level. Parameters used to indicate power consumption may include one or more of the following: PL1 (or referred to as the first power consumption value), PL2, an EPP, or the like.

In a possible implementation, the scheduling engine may also adjust the first policy based on the load status to obtain a first target policy, and then deliver the first target policy which is more accurate. This is not specifically limited in this embodiment of this application.

S702. The terminal device turns off a screen at a first time point.

Optionally, when the user performs no operation, the terminal device may turn off the screen when duration in which the user performs no operation reaches screen-off setting duration.

Optionally, the terminal device turns off the screen in response to a screen-off operation. The screen-off operation may include an operation of clicking a sleep button by the user, or an operation of clicking a screen-off button, or may include double-clicking a first button by the user and the like. Program code corresponding to the first button is used to trigger the terminal device to turn off the screen.

Optionally, the terminal device turns off the screen when duration in which an application in a DISPLAY state does not exist reaches the screen-off setting duration. The DISPLAY can be understood as a video stream.

For example, when the power limit value of the terminal device is the first power consumption value, the terminal device may switch from the first mode to the second mode when detecting screen off, and deliver a second policy, and the second policy includes a second power consumption value. The second power consumption value is a power limit value PL1 of the terminal device in the second mode, and the second power consumption value is greater than the first power consumption value.

With reference to the embodiment corresponding to FIG. 3A and FIG. 3B, a process of delivering the second policy may be as follows: When detecting screen off, the power manager may return a screen-off event to the system event probe in the Computer Manager by using a callback function of the operating system event driver node. The system event probe reports the screen-off event to the scene identification module. When receiving the screen-off event reported by the system event module, the scene identification module of the terminal device may determine to switch from the first mode to the second mode, for example, determine that the terminal device currently may be in a second scene. The scene identification module may send the second scene to the basic policy matching manager. The basic policy matching manager may determine the second policy corresponding to the second scene, and feed back the second policy to the scene identification module. The scene identification module may send the second policy to the scheduling engine at the application layer. Further, the scheduling engine separately delivers the second policy to the operating system to system on chip driver node and the power manager.

In a possible implementation, the scheduling engine may also adjust the second policy based on the load status to obtain a second target policy, and then deliver the second target policy which is more accurate. This is not specifically limited in this embodiment of this application.

S703. The terminal device enters a sleep state at a second time point.

Between the first time point and the second time point, the terminal device is in the second mode, and the power limit value in the second mode is the second power consumption value.

The second time point can be understood as a corresponding time point when duration in which the user performs no operation reaches sleep setting duration.

For example, the terminal device may enter the sleep state in the second mode, and store a process context at the second power consumption value, to reduce a time consumed for entering the sleep state. After the terminal device enters the sleep state, power consumption of the terminal device is far less than the first power consumption value.

With reference to the embodiment corresponding to FIG. 3A and FIG. 3B, before the power manager determines to enter sleep, modules such as the process manager and the operating system event driver node may be notified in a broadcast manner. Adaptively, the process manager may store the process context, the operating system event driver node may return a sleep event to the system event probe in the Computer Manager by using a callback function of the operating system event driver node, and the system event probe does not continue to report the sleep event to the scene identification module. Further, the power manager may enter the sleep state.

S704. The terminal device turns on the screen in response to a wake-up operation at a third time point.

The wake-up operation may be a user operation performed on a mouse, a keyboard, or the like by the user.

From the third time point to a time point before that the terminal device is woken up and turns on the screen ends, the power limit value of the terminal device is the second power consumption value.

With reference to the embodiment corresponding to FIG. 3A and FIG. 3B, when detecting that the screen is turned on, the power manager may return a screen-on event to the Computer Manager by using a callback function of the operating system event driver node, and the Computer Manager may determine to keep the second policy.

For example, in response to the wake-up operation, the terminal device may turn on the screen, keep the second power consumption value, and load the process context at the second power consumption value, to reduce a time consumed for exiting the sleep state. Further, the terminal device may perform scene identification after turning on the screen and being woken up, for example, deliver the first policy when identifying that the terminal device is currently in a scene before the screen is turned off.

Based on this, the terminal device can reduce a time consumed for entering/exiting the sleep state by setting the condition 1, thereby improving user experience of using the sleep state.

### Scene 2: Screen off->lock screen->sleep->screen on->wake-up->unlock

In this embodiment of this application, the terminal device may enter a screen-off state in the first mode, switch from the first mode to the second mode when turning off the screen, do not report a lock screen event when detecting the lock screen, and then enter the sleep state. When detecting a wake-up operation, the terminal device controls the display screen to turn on, does not report a screen-on event, wakes up a system, and unlocks the terminal device.

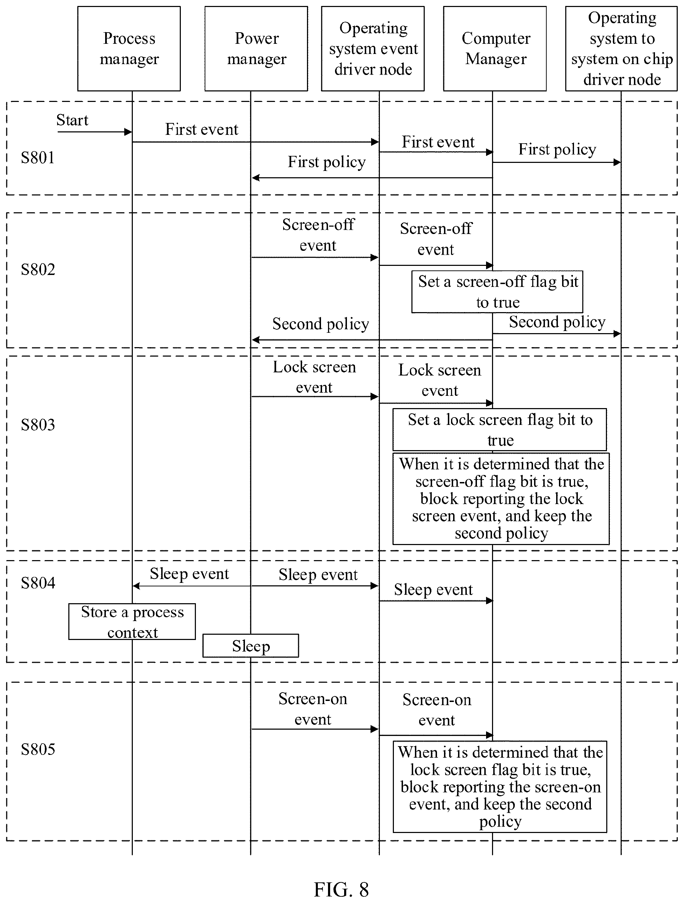

In this case, the scene 2 may be: first mode->screen off->switch to the second mode->lock screen (not reporting the lock screen event)->sleep->screen on (not reporting the screen-on event)->wake-up->unlock
For the scene 2, FIG. 8 is a schematic flowchart of another resource scheduling method according to an embodiment of this application. In the embodiment corresponding to FIG. 8, the terminal device may turn off a screen after duration in which a user performs no operation reaches screen-off setting duration, sleep after duration in which the user performs no operation reaches sleep setting duration, and lock the screen after duration in which the user performs no operation reaches lock screen setting duration. The lock screen setting duration is greater than the screen-off setting duration, and the screen-off setting duration is less than the sleep setting duration.

As shown in FIG. 8, the resource scheduling method may include the following steps.

S801. The terminal device starts, and does not run a first application.

For the step described in S801, refer to descriptions in S701. Details are not described herein again.

S802. The terminal device turns off the screen in response to a screen-off operation at a fourth time point.

Descriptions of the fourth time point may be similar to descriptions of the first time point. In this case, for the step described in S802, refer to descriptions in S702. Details are not described herein again.

In a possible implementation, when the terminal device detects that the screen is turned off, a screenoff (screenoff) flag bit may be set. A value of screenoff is true, and screenoff being true is used to indicate that the terminal device is in a screen-off state. The terminal device may switch from a first mode to a second mode, and deliver a second policy. For a process of delivering the second policy by the terminal device, refer to the step shown in S702. Details are not described herein again.

S803. The terminal device locks the screen at a fifth time point.

The fifth time point can be understood as a corresponding time point when duration in which the user performs no operation reaches the lock screen setting duration.

In a possible implementation, the terminal device may alternatively lock the screen at the fifth time point when detecting an operation of entering win+L by the user. A lock screen manner is not limited in this embodiment of this application.

Referring to descriptions in the condition 2, because a screen-locked state may enable the terminal device to enter an idle scene, the terminal device may not report a lock screen event when detecting that the screen is locked and is currently turned off, to prevent the terminal device from switching from the second mode to the first mode.

For example, when detecting the lock screen event, the terminal device may determine whether the value of screenoff is true; and when the value of screenoff is true, may determine that the terminal device is in the screen-off state. The terminal device may not report the lock screen event. For example, the terminal device ends current determining logic, and returns the current determining logic to a function caller through return, to prevent the terminal device from switching from the second mode to the first mode due to reporting of the screen-locked state.

In a possible implementation, when detecting the lock screen event and determining that the value of screenoff is not true, the terminal device may determine that the terminal device is not in the screen-off state, and the terminal device may report the lock screen event, and switch from the second mode to the first mode based on the lock screen event.

With reference to the embodiment corresponding to FIG. 3A and FIG. 3B, when a system probe module of the terminal device detects the lock screen event, and determines, based on the screenoff flag bit in S802, that the value of screenoff is true, the system probe module in a Computer Manager may not report the lock screen event to a scene identification module. In this scene, the terminal device is still in the second mode.

In a possible implementation, when the terminal device detects the lock screen event, an islocked (islocked) flag bit may also be set. A value of islocked is true, and islocked being true is used to indicate that the terminal device is in the screen-locked state.

S804. The terminal device enters a sleep state at a sixth time point.

Between the fourth time point and the sixth time point, the power limit value of the terminal device is a second power consumption value.

The sixth time point can be understood as a corresponding time point when duration in which the user performs no operation reaches the sleep setting duration.

For example, the terminal device may enter the sleep state in the second mode, and store a process context at the second power consumption value, to reduce a time consumed for entering the sleep state. After the terminal device enters the sleep state, power consumption of the terminal device is far less than a first power consumption value.

S805. The terminal device turns on the screen in response to a wake-up operation at a seventh time point.

From the seventh time point to a time point before the terminal device unlocks, the power limit value of the terminal device is the second power consumption value.

Referring to descriptions in the condition 3, when the end device detects that the screen is turned on and is currently locked, the terminal device reports a screen-on event carrying the screen-locked state. The terminal device delivers, based on the screen-locked state, a command for setting to the idle scene, so that the terminal device is in the first mode. When the terminal device enters a screen-on state from the screen-locked state, when the terminal device may detect the screen-on state and determine that the terminal device is currently in the screen-locked state, the terminal device may not report the screen-on event carrying the screen-locked state, so that the terminal device keeps in the second mode.

With reference to the embodiment corresponding to FIG. 3A and FIG. 3B, when a system event probe detects the screen-on event, it may be determined whether the value of the islocked flag bit carried in the screen-on event is true. When the value of islocked is true, the system event probe may determine that the terminal device is in the screen-locked state and do not report the screen-on event to the scene identification module. In this case, the terminal device ends current determining logic, and returns the current determining logic to a function caller through return, to prevent the terminal device from switching from the second mode to the first mode due to the screen-locked state carried in the screen-on event.

In a possible implementation, when the system event probe detects the screen-on event and determines that the value of the islocked carried in the screen-on event is not true, it may be determined that the terminal device is not in the screen-locked state, the system event probe may normally report the screen-on event to the scene identification module, and the scene identification module may perform scene identification based on the screen-on event.

In a possible implementation, after not reporting the screen-on event, the terminal device may set the value of islocked to false, and islocked being false is used to reset the islocked flag bit, to avoid affecting a next screen-locked state.

Further, after the terminal device is woken up, the terminal device may unlock the terminal device based on an operation such as entering a password by the user, and perform scene identification after unlocking, for example, deliver a first policy when identifying that the terminal device is currently in a first scene before the screen is turned off. The terminal device may be in a busy (busy) state after unlocking, and perform scene identification in the busy state.

Based on this, the terminal device can reduce a time consumed for entering/exiting the sleep state by setting the condition 1, the condition 2, and the condition 3 without modifying the lock screen to enter the idle scene, thereby improving user experience of using the sleep state.

With reference to the embodiment corresponding to the scene 2, this embodiment of this application provides two examples. For details, refer to a solution 1 and a solution 2.

Solution 1: The terminal device enters the sleep state from a default scene, and plays no audio or video in the background.

**Table 1 is a schematic table of scene switching according to an embodiment of this application**

| Time | Scene identifier |
|---|---|
| 17:28:31 | -1 (used to indicate a default scene) |
| 17:29:30 | 3 (used to indicate an idle scene) |
| 17:33:31 | -1 |

As shown in Table 1, the terminal device may be in the second mode in the default scene, and may be in the first mode in the idle scene.

**Table 2 is a schematic table of a device status change according to an embodiment of this application**

| Time | Duration | Device status |
|---|---|---|
| 17:23:45 | 0:04:46 | Active (active) |
| 17:28:32 | 0:04:59 | active |
| 17:33:31 | 0:00:11 | screen off |
| 17:33:43 | 0:03:41 | Sleep (sleep) |
| 17:37:24 | 0:02:43 | active |
| 17:40:12 | 0:00:00 | Report generated (report generated) |

With reference to Table 1 and Table 2, the terminal device may be in the default scene, enter the idle scene without detecting a user operation for the terminal device within 1 minute, and enter the sleep state after 5 minutes. Before entering the sleep state, the terminal device may turn off the screen. At a moment that the screen is turned off at 17:33:31, a current scene of the terminal device may be switched from a scene in the first mode to a scene (for example, a scene identifier is -1) in the second mode. The terminal device does not respond to the screen-locked state or the screen-on state until being woken up. The terminal device may always keep in the second mode when entering the sleep state and exiting the sleep state.

Solution 2: The terminal device enters the sleep state from a browser scene, and plays no audio or video in the background.

**Table 3 is a schematic table of scene switching according to an embodiment of this application**

| Time | Scene identifier |
|---|---|
| 09:35:04 | -1 |
| 09:35:15 | 9 (used to indicate a browser scene) |
| 09:35:36 | 9 |
| 09:35:46 | 9 |
| 09:37:15 | 3 |
| 09:41:14 | -1 |
| 09:44:12 | -1 |

As shown in Table 1, the terminal device may be in the first mode in the browser scene, in the second mode in the default scene, and may be in the first mode in the idle scene.

**Table 4 is a schematic table of a device status change according to an embodiment of this application**

| Time | Duration | Device status |
|---|---|---|
| 09:27:18 | 0:07:46 | active |
| 09:35:39 | 0:05:35 | active |
| 09:41:14 | 0:00:00 | screen off |
| 09:41:14 | 0:02:51 | sleep |
| 09:44:06 | 0:02:38 | active |
| 09:46:50 | 0:00:00 | report generated |

With reference to Table 3 and Table 4, the terminal device may be in the browser scene, enter the idle scene without detecting a user operation for the terminal device within 1 minute, and enter the sleep state after 4 minutes. Before entering the sleep state, the terminal device may turn off the screen. At a moment that the screen is turned off at 09:41:14, a scene of the terminal device may be switched from a scene in the first mode to a scene (for example, a scene identifier is -1) in the second mode. The terminal device does not respond to the screen-locked state or the screen-on state until being woken up. The terminal device may always keep in the second mode when entering the sleep state and exiting the sleep state. Further, the terminal device may perform scene identification after unlocking, for example, identify the browser scene before the screen is turned off.

### Scene 3: Lock screen->screen off->sleep->screen on->wake-up->unlock

In this embodiment of this application, the terminal device may enter a screen-locked state in the second mode, switch from the second mode to the first mode when the screen is locked, switch from the first mode to the second mode when detecting that the screen is turned off, and then enter a sleep state. When detecting a wake-up operation, the terminal device controls a display screen to turn on, does not report a screen-on event, wakes up a system, and unlocks the terminal device.

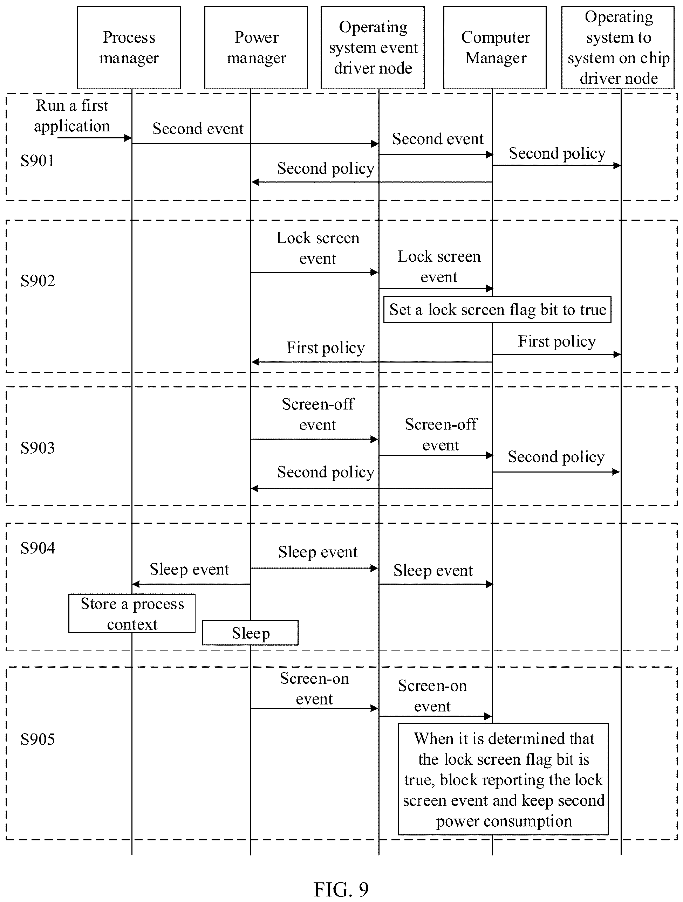

In this case, the scene 3 may be: second mode->lock screen->switch to the first mode->screen off->switch to the second mode->sleep->screen on (not reporting the screen-on event)->wake-up->unlock
For the scene 3, FIG. 9 is a schematic flowchart of still another resource scheduling method according to an embodiment of this application.

In the embodiment corresponding to FIG. 9, the terminal device may set to turn off a screen after duration in which a user performs no operation reaches screen-off setting duration, sleep after duration in which the user performs no operation reaches sleep setting duration, and lock the screen after duration in which the user performs no operation reaches lock screen setting duration. The lock screen setting duration is less than the screen-off setting duration, and the screen-off setting duration is less than the sleep setting duration.

As shown in FIG. 9, the resource scheduling method may include the following steps.

S901. The terminal device runs a first application.

When the terminal device runs the first application, the terminal device may be in a second mode, and deliver a second policy, and the second policy includes a second power consumption value. For a process of delivering the second policy by the terminal device, refer to descriptions of the step shown in S702. Details are not described herein again.

In a possible implementation, the terminal device may enter the second mode after being powered on. A manner in which the terminal device enters the second mode is not limited in this embodiment of this application.

S902. The terminal device locks the screen at an eighth time point.

The eighth time point can be understood as a corresponding time when duration in which the user performs no operation reaches the lock screen setting duration.

Optionally, the terminal device may lock the screen when duration in which the user performs no operation reaches the lock screen setting duration.

Optionally, the terminal device may alternatively actively lock the screen when receiving entering win+L or a lock screen key in a keyboard by the user, or the like. This lock screen manner is not specifically limited in this embodiment of this application.

When detecting the lock screen, the terminal device may switch from the second mode to a first mode, and deliver a first policy, so that the terminal device enters the first mode. For a process of delivering the first policy by the terminal device, refer to descriptions in S701. Details are not described herein again.

S903. The terminal device turns off the screen in response to a screen-off operation at a ninth time point.

The ninth time point can be understood as a corresponding time point when duration in which the user performs no operation reaches the screen-off setting duration. Between the ninth time point and the eighth time point, the power limit value of the terminal device is a first power consumption value, and the first power consumption value is less than the second power consumption value.

Optionally, when the terminal device determines, in S901, that the first application is not running, the power limit value of the terminal device is the first power consumption value. When the terminal device determines, in S902, that the terminal device locks the screen, the power limit value of the terminal device is the first power consumption value. Further, when the terminal device determines, in S903, that the terminal device turns off the screen, the terminal device may switch from the first mode to the second mode. In other words, the power limit value of the terminal device between the ninth time point and a tenth time point of the terminal device is the second power consumption value.

When the terminal device is in the first mode, the terminal device may switch from the first mode to the second mode when detecting that the screen is turned off, and deliver the second policy. For a process of delivering the second policy by the terminal device, refer to descriptions in S702. Details are not described herein again.

S904. The terminal device enters a sleep state at the tenth time point.

Between the ninth time point and the tenth time point, the power limit value of the terminal device is the second power consumption value.

The tenth time point can be understood as a corresponding time point when duration in which the user performs no operation reaches the sleep setting duration.

For example, the terminal device may enter the sleep state in the second mode, and store a process context at the second power consumption value, to reduce a time consumed for entering the sleep state. Further, after the terminal device enters the sleep state, power consumption of the terminal device is far less than the first power consumption value.

S905. The terminal device turns on the screen in response to a wake-up operation at an eleventh time point.

After the eleventh time point, the power limit value of the terminal device is the second power consumption value.

The terminal device may not report a screen-on event when detecting the screen-on event. For a process of not reporting the screen-on event, refer to descriptions in S805. Details are not described herein again.

Further, after the terminal device is woken up, the terminal device may unlock the terminal device based on an operation such as entering a password by the user, and perform scene identification after unlocking, for example, deliver the second policy when identifying that the terminal device is currently in a second scene before the screen is locked.

Based on this, the terminal device can reduce a time consumed for entering/exiting the sleep state by setting the condition 1 and the condition 3 without modifying the lock screen to enter an idle scene, thereby improving user experience of using the sleep state.

With reference to the embodiment corresponding to the scene 3, this embodiment of this application provides an example. For details, refer to a solution 3.

Solution 3: The terminal device enters the sleep state from a default lock screen scene.

**Table 5 is a schematic table of scene switching according to an embodiment of this application**

| Time | Scene identifier |
|---|---|
| 10:40:52 | -1 |
| 10:41:05 | 3 |
| 10:41:36 | -1 |

**Table 6 is a schematic table of a device status change according to an embodiment of this application**

| Time | Duration | Device status |
|---|---|---|
| 10:38:52 | 0:02:43 | active |
| 10:41:36 | 0:04:38 | screen off |
| 10:46:14 | 0:01:23 | sleep |
| 10:47:38 | 0:01:44 | active |
| 10:49:28 | 0:00:00 | report generated |

With reference to Table 5 and Table 6, the terminal device may enter the idle scene in a screen-locked state when detecting an operation of entering win+L by the user, and enter the sleep state after a period of time. Before entering the sleep state, the terminal device may turn off the screen, and switch from a scene in the first mode to a scene (for example, a scene identifier is -1) in the second mode at a moment that the screen is turned off at 10:41:36. Further, the terminal device may perform scene identification after unlocking, and identify the default scene.

### Scene 4: Screen off->screen on

In this embodiment of this application, the terminal device may enter a screen-off state in the first mode, and switch from the first mode to the second mode when turning off the screen. When detecting a wake-up operation, the terminal device controls a display screen to turn on, and performs scene identification.

In this case, the scene 4 may be: first mode->screen off->switch to the second mode->screen on

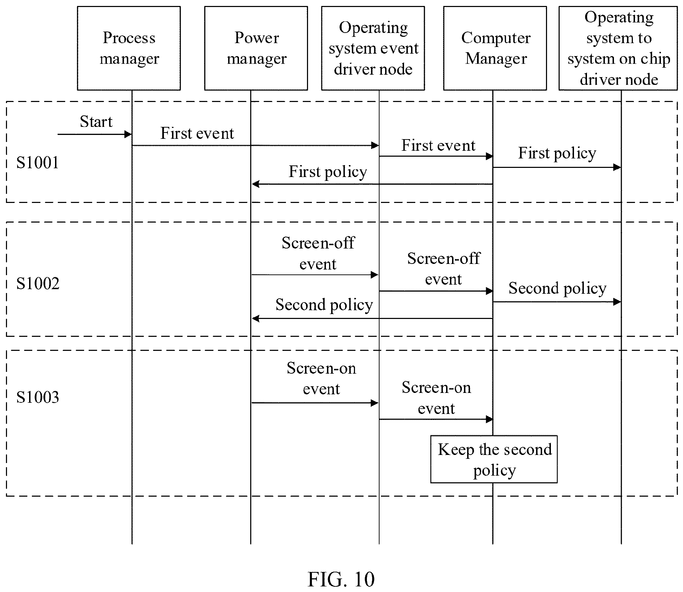

For the scene 4, FIG. 10 is a schematic flowchart of yet another resource scheduling method according to an embodiment of this application. In the embodiment corresponding to FIG. 10, the terminal device may turn off a screen after duration in which a user performs no operation reaches screen-off setting duration.

As shown in FIG. 10, the resource scheduling method may include the following steps.

S1001. The terminal device starts, and does not run a first application.

When the first application is not running, the terminal device may be in a first mode, and deliver a first policy. The first policy includes a first power consumption value. For a process of delivering the first policy by the terminal device, refer to descriptions in S701. Details are not described herein again.

S1002. The terminal device turns off the screen at a twelfth time point.

The terminal device may deliver a second policy when detecting that the screen is turned off. For a screen-off trigger manner and a process of delivering the second policy by the terminal device, refer to descriptions in S702. Details are not described herein again.

S1003. The terminal device turns on the screen in response to a wake-up operation at a thirteenth time point.

Between the thirteenth time point and the twelfth time point, the power limit value of the terminal device is a second power consumption value.

In response to the wake-up operation, the terminal device may turn on the screen, and perform scene identification after the screen is turned on, for example, deliver the first policy when identifying that the terminal device is currently in a first scene before the screen is turned off.

Based on this, the terminal device can reduce a time consumed for entering/exiting the sleep state by setting the condition 1, thereby improving user experience of using the sleep state.

It may be understood that the interface provided in the embodiments of this application is only an example, and does not constitute a limitation on the embodiments of this application.

It should be noted that user information (including but not limited to user equipment information, user personal information, and the like) and data (including but not limited to data used for analysis, stored data, displayed data, and the like) involved in this application are all information and data that are authorized by the user or that are fully authorized by each party. In addition, collection, use, and processing of the related data need to comply with relevant laws, regulations, and standards, and a corresponding operation entry is provided for the user to choose to authorize or reject.

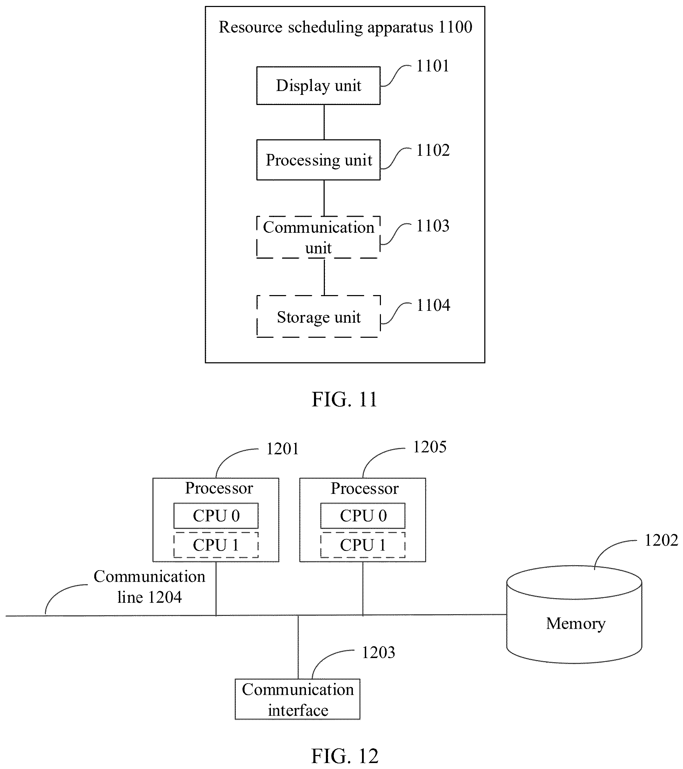

The method provided in the embodiments of this application is described above with reference to FIG. 4A and FIG. 4B-FIG. 10. An apparatus for performing the method provided in the embodiments of this application is described below. FIG. 11 is a schematic diagram of a structure of a resource scheduling apparatus according to an embodiment of this application. The resource scheduling apparatus may be the terminal device in the embodiments of this application, or may be a chip or a chip system in the terminal device.

As shown in FIG. 11, a resource scheduling apparatus 1100 may be applied to a communication device, a circuit, a hardware component, or a chip, and the resource scheduling apparatus includes a display unit 1101 and a processing unit 1102. The display unit 1101 is configured to support the resource scheduling apparatus 1100 in performing a display step. The processing unit 1102 is configured to support the resource scheduling apparatus 1100 in performing an information processing step.

In a possible implementation, the resource scheduling apparatus 1100 may further include a communication unit 1103. Specifically, the communication unit is configured to support the resource scheduling apparatus 1100 in performing steps of data sending and data receiving. The communication unit 1103 may be an input or output interface, a pin, a circuit, or the like.

In a possible embodiment, the resource scheduling apparatus may further include a storage unit 1104. The processing unit 1102 and the storage unit 1104 are connected to each other by using a line. The storage unit 1104 may include one or more memories, and the memory may be a component configured to store a program or data in one or more devices or circuits. The storage unit 1104 may exist independently, and is connected to the processing unit 1102 of the resource scheduling apparatus by using a communication line. Alternatively, the storage unit 1104 may be integrated into the processing unit 1102.

The storage unit 1104 may store computer-executable instructions of the method in the terminal device, so that the processing unit 1102 performs the method in the foregoing embodiments. The storage unit 1104 may be a register, a cache, a RAM, or the like, and the storage unit 1104 may be integrated into the processing unit 1102. The storage unit 1104 may be a read-only memory (read-only memory, ROM) or another type of static storage device that may store static information and instructions. The storage unit 1104 may be independent of the processing unit 1102.

FIG. 12 is a schematic diagram of a hardware structure of another terminal device according to an embodiment of this application. As shown in FIG. 12, the terminal device includes a processor 1201, a communication line 1204, and at least one communication interface (a communication interface 1203 is used as an example for description in FIG. 12).

The processor 1201 may be a general-purpose central processing unit (central processing unit, CPU), a microprocessor, an application-specific integrated circuit (application-specific integrated circuit, ASIC), or one or more integrated circuits for controlling program execution in the solutions in this application.

The communication line 1204 may include a circuit for transferring information between the foregoing components.

The communication interface 1203 uses any apparatus such as a transceiver and is configured to communicate with another device or a communication network, for example, an Ethernet or a wireless local area network (wireless local area networks, WLAN).

Possibly, the terminal device may further include a memory 1202.

The memory 1202 may be a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer, but is not limited thereto. The memory may exist independently, and is connected to the processor by using the communication line 1204. The memory may alternatively be integrated into the processor.

The memory 1202 is configured to store computer-executable instructions for performing the solutions in this application, and the processor 1201 controls execution. The processor 1201 is configured to execute the computer-executable instructions stored in the memory 1202, to implement the method provided in the embodiments of this application.

Possibly, the computer-executable instructions in this embodiment of this application may also be referred to as application code. This is not specifically limited in this embodiment of this application.

During specific implementation, in an embodiment, the processor 1201 may include one or more CPUs, for example, a CPU 0 and a CPU 1 in FIG. 12.

During specific implementation, in an embodiment, the terminal device may include a plurality of processors, for example, the processor 1201 and a processor 1205 in FIG. 12. Each of these processors may be a single-core (single-CPU) processor or a multi-core (multi-CPU) processor. The processor herein may be one or more devices, circuits, and/or processing cores configured to process data (for example, computer program instructions).

A computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium accessible by the computer, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), or a semiconductor medium (for example, a solid state disk (solid state disk, SSD)).

An embodiment of this application further provides a computer-readable storage medium. All or some of the methods described in the foregoing embodiments may be implemented by using software, hardware, firmware, or any combination thereof. The computer-readable medium may include a computer storage medium and a communication medium, and may further include any medium that enables a computer program to be transmitted from a place to another place. The storage medium may be any target medium accessible by a computer.

In a possible design, the computer-readable medium may include a compact disc read-only memory (compact disc read-only memory, CD-ROM), a RAM, a ROM, an EEPROM, or another optical disc memory; and the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc, and the magnetic disk usually reproduces data magnetically, while the optical disc reproduces data optically by using a laser.

A combination of the foregoing should also be included in the scope of the computer-readable medium. The foregoing descriptions are merely specific implementations of the present invention. However, the protection scope of the present invention is not limited thereto. Any change or replacement readily figured out by a person skilled in the art within the technical scope disclosed in the present invention shall fall within the protection scope of the present invention. Therefore, the protection scope of the present invention shall be subject to the protection scope of the claims.

## Claims

1. A resource scheduling method, wherein the method comprises:
starting, by a terminal device, wherein a power limit value of the terminal device is a first power consumption value;
turning, by the terminal device, off a screen at a first moment;
locking, by the terminal device, the screen at a second moment;
entering, by the terminal device, a sleep state at a third moment, wherein power limit values of the terminal device between the first moment and the second moment and between the second moment and the third moment are a second power consumption value, and the second power consumption value is greater than the first power consumption value; and
turning, by the terminal device, on the screen at a fourth moment.

2. The method according to claim 1, wherein after the locking, by the terminal device, the screen, the method further comprises:
not setting, by the terminal device, the power limit value of the terminal device to the first power consumption value based on the lock screen and a first flag bit being a first value, wherein the first flag bit being the first value is used to indicate that the terminal device is in a screen-off state.

3. The method according to claim 1 or 2, wherein after the turning, by the terminal device, off a screen, the method further comprises:
setting, by the terminal device, the power limit value of the terminal device to the second power consumption value based on the screen-off.

4. The method according to claim 2, wherein the terminal device comprises a system probe module and a scene identification module, and the not setting, by the terminal device, the power limit value of the terminal device to the first power consumption value based on the lock screen and a first flag bit being a first value comprises:
not reporting, by the system probe module, a lock screen event to the scene identification module based on the lock screen and the first flag bit being the first value, and not setting the power limit value of the terminal device to the first power consumption value.

5. The method according to claim 4, wherein after the turning, by the terminal device, on the screen, the method further comprises:
not reporting, by the system probe module, a screen-on event to the scene identification module based on the screen-on and a second flag bit being a second value, wherein the second flag bit being the second value is used to indicate that the terminal device is in a screen-locked state.

6. The method according to any one of claims 1-5, wherein the method further comprises:
running, by the terminal device, a first application, wherein the power limit value of the terminal device is the second power consumption value;
locking, by the terminal device, the screen at a fifth moment;
turning, by the terminal device, off the screen at a sixth moment, wherein the power limit value of the terminal device between the fifth moment and the sixth moment is the first power consumption value;
entering, by the terminal device, the sleep state at a seventh moment, wherein the power limit value of the terminal device between the sixth moment and the seventh moment is the second power consumption value; and
turning, by the terminal device, on the screen at an eighth moment.

7. The method according to claim 6, wherein after the locking, by the terminal device, the screen, the method further comprises:
entering, by the terminal device, a first based on the lock screen and the first flag bit being a third value and setting the power limit value of the terminal device to the first power consumption value, wherein the first flag bit being the third value is used to indicate that the terminal device is not in the screen-off state.

8. A terminal device, comprising a processor and a memory, wherein
the memory is configured to store a computer program; and
the processor is configured to invoke and execute the computer program, to enable the terminal device to perform the method according to any one of claims 1 to 7.

9. A computer-readable storage medium, configured to store a computer program, wherein when the computer program is run on a computer, the computer is enabled to perform the method according to any one of claims 1 to 7.

10. A computer program product, comprising a computer program, wherein when the computer program is run, a computer is enabled to perform the method according to any one of claims 1 to 7.
